# EUROPEAN PATENT SPECIFICATION

(11) **EP 1 745 758 B1**
(45) Date of publication and mention of the grant of the patent: **31.12.2008**
(21) Application number: 06014935.8
(22) Date of filing: 18.07.2006
(51) Int. Cl.: A61C 8/00

(54) **Dental implant for magnetic attachment**
Dentalimplantat für magnetische Befestigung
Implant dentaire pour fixation magnétique

(30) Priority: 22.07.2005 JP 2005212872
(43) Date of publication of application: 24.01.2007
(73) Proprietor: GC Corporation, Tokyo 174-8585 (JP)
(72) Inventor: Kojima, Norio GC Corp., Tokyo 174-8585 (JP)
(74) Representative: Müller-Boré & Partner Patentanwälte

(56) References cited:
- US-A1- 2002 106 610

## Description

The present invention relates to a dental implant for a magnetic attachment, which is used as a retainer when applying a denture base prosthesis to dental implant prosthetic remedy.

In recent years, implant remedy is being spread as one measure of dental prosthetic remedy, in which a crown is applied to a sole tooth, and a bridge or an overdenture is applied to plural teeth, and it has been confirmed that the prostheses function as an alternate of lost teeth for a long period of time. In these applications, a mechanical attachment, such as a bar attachment and a ball attachment, has been used for an overdenture.

On the other hand, a magnetic attachment is being subjected to full-fledged clinical application, in which a keeper formed of a soft magnetic material is fixed to an anchor tooth formed on a remaining tooth, and a magnet structure is embedded in an alveolar ridge side of a denture, so as to utilize a magnetic attracting force occurring between the magnet structure and the keeper. The magnetic attachment characteristically has such various advantages that the anchor tooth suffers from less load since a side skid phenomenon occurs, the denture can be easily designed and produced since the direction of the detaching force may not be strict, the retaining force is not attenuated since there is no part that is liable to be worn or broken, such as a clasp in a mechanical retaining device, excellent aesthetic quality can be obtained since the attachment does not appear outside as in a clasp, and the attachment can be easily maintained since it can be easily detached by a patient and has a simple form without protrusions as in a clasp. Therefore, the magnetic attachment becomes to be used broadly.

Under the circumstances, application of a magnetic attachment to dental implant prosthetic remedy is being studied. The dental implant prosthetic remedy involves such a problem that bone surrounding an implant exhibits absorption upon application of an excessive load thereto to fail dental implant prosthetic remedy, and in particular, application of a transversal load is disadvantageous. A magnetic attachment has a function of reducing transmission of a transversal load owing to the side skid phenomenon, and therefore, is expected as such a retaining device that has less incidence of the bone absorption. Furthermore, it also has the aforementioned advantages, i.e., the denture can be easily designed and produced since the direction of the detaching force may not be strict, the retaining force is not attenuated since there is no part that is liable to be worn or broken as in a mechanical retaining device, and the attachment can be easily maintained since it can be easily detached by a patient and has a simple form, and has significant usefulness on application to the dental implant prosthetic remedy.

Document US 2002/0106610 A1 discloses a dental implant with impression cap. Although this document does not pertain to dental implants for a magnetic attachment, it has most features in common with the device according to the invention. This document does however not disclose, that a keeper formed of a soft magnetic material is provided.

In a dental implant for a magnetic attachment, a keeper and a magnetic structure are fixed to an implant and an alveolar ridge side of a denture, respectively, the basic fixing mechanism of which includes a four-piece assembly containing an abutment, an abutment screw, a keeper and a screw for fixing the keeper, which are connected in this order for applying to a fixture (as described, for example, in JP-A-7-136190 and JP-A-2000-24004), a three-piece assembly containing an abutment, a ring member and a keeper with screw, which are connected in this order for applying to a fixture (as described, for example, in JP-A-2002-78720), a two-piece assembly containing an abutment and a keeper with screw, which are connected for applying to a fixture (as described, for example, in JP-A-6-296625), and a keeper with screw as a one-piece member applied to a member containing an abutment and a fixture integrated (as described, for example, in JP-A-2003-250816).

In the dental implant prosthetic remedy, however, bone surrounding a fixture embedded in maxilla exhibits absorption in some cases due to load and accumulation of bacteria, and the absorption of bone lowers the gingival height in some cases to cause exposure of the implant in a part where it penetrates the gingiva. In this case, the exposed dental implant for a magnetic attachment is covered with the prosthesis and cannot seen from outside when the implant is a denture prosthesis, but when the implant is a crown prosthesis or a bridge prosthesis, the implant is not covered to cause an aesthetic problem particularly in anterior teeth. In the system having an independent member (such as the abutment or the ring member) in the part the implant penetrates the gingiva as in JP-A-7-136190, JP-A-2000-24004 and JP-A-2002-78720, such a measure may be employed that the member is replaced with one having a lower height, and the crown prosthesis is again established from the gingiva, whereby the natural appearance is reproduced. In the system having an abutment and a fixture integrated as in JP-A-2003-250816, however, the aforementioned measure cannot be employed, and the system is appropriately selected depending on clinical cases and embedding positions.

In dental implant prosthetic remedy, an overdenture is initially used as a prosthesis, but is later replaced with a bridge according to a request of a patient in some cases. Taking the situation in consideration, it is desirable to use an implant having an abutment structure capable of dealing with exposure of the implant.

In dental implant prosthetic remedy, there are cases where a vertical dimension of occlusion cannot be clinically made large to demand a prosthesis having a small vertical dimension, and thus a structure of a combination of an abutment having a low height and a keeper is demanded. The keeper is disposed at a position higher than the gingival surface to expose on the gingiva. When the height thereof is lower, the moment applied to the implant is smaller to improve the safety on the surrounding bone and the implant, and therefore, a structure having a small vertical dimension is useful.

In view of the aforementioned points, a dental implant for a magnetic attachment preferably has such a structure that a fixture and an abutment are separately provided, and an abutment and a keeper having low vertical dimensions can be employed. However, the structures disclosed in JP-A-7-136190, JP-A-2000-24004 and JP-A-2002-78720 have problems where a large number of constitutional parts are used, and the vertical dimension is difficult to lower.

In all the four kinds of structures of the conventional dental implant for a magnetic attachment disclosed in the above patent documents, the screw for fixing the keeper or the screw part of the keeper is formed of a soft magnetic material, which has a relatively low strength. The screw part of the keeper is screwed into an internal thread provided in the fixture or the abutment screw, and has a thin diameter of 2 mm or 1.4 mm due to dimensional restriction, and therefore, it is difficult to impart a sufficient strength thereto in consideration of the material thereof.

Furthermore, the screw part of the keeper receives the tightening torque and also receives load in various direction by occlusion. The magnetic attachment has such a function that a transversal load from the denture is hard to be transmitted to the implant owing to the side skid characteristics, but in the case where the denture is deviated and slanted, the absorption surface of the magnet structure fixed to the alveolar ridge side of the denture is in contact with the end surface of the keeper to apply a transversal load to the implant, which brings about a large load to the screw connecting the members. In the case where a denture prosthesis is employed in the dental implant prosthetic remedy, to which a magnetic attachment is applied, the load cannot be dispersed by connecting fixtures as in abridge prosthesis, and thus there is a possibility that the fixture receives a larger load since it independently receives a load. Accordingly, the fixture of the denture prosthesis is exposed to severe conditions as compared to the case of a bridge prosthesis. It is important to reduce the load applied to the screw part taking the aforementioned conditions into consideration, but the structures disclosed in JP-A-7-136190, JP-A-2000-24004, JP-A-2002-78720 and JP-A-6-296625 are insufficient in countermeasure to breakage of the screw part since the load is applied directly to the screw part.

An object of the present invention is to eliminate the problems associated with the conventional art and to provide a dental implant for a magnetic attachment having such a structure that an abutment is provided as an independent member for replacing the abutment to a fixture embedded in maxilla of an edentulous jaw, but the vertical dimensions of the abutment and the keeper can be low, and the screw part of the keeper is hard to receive a transversal load.

As a result of earnest investigation made by the inventor for solving the problem, it has been found that the reason why the vertical dimensions of an abutment and a keeper cannot be lowered in the conventional dental implant for a magnetic attachment is that when the abutment is rotated around the major axis of the fixture, it is not preferred since the connection with the gingiva is broken, and stimulation due to friction is applied, and therefore, it is necessary that the abutment is bonded to the fixture with a height sufficient for preventing the abutment from being rotated, for which the abutment should have on the side of the fixture a hole having a rectangular column shape for engaging with a rectangular column provided to protrude from an end surface of the fixture on the side of an oral cavity, and the vertical dimension of the abutment is increased by the part having the hole having a rectangular column shape formed therein. It has also been found that the reason why such a possibility occurs that the screw part of the keeper is broken due to a transversal load applied thereto is that the transversal load applied to the keeper immediately acts on the screw part fixing the keeper.

Accordingly, the inventor has found that the vertical dimension of the abutment can be lowered while maintaining the function of preventing the abutment from being rotated with respect to the fixture to ensure the stable state by the following structure. The part, where the abutment is engaged with the fixture in such manner that the abutment is not rotated around the major axis is not formed as a rectangular column protruding from an end surface of the fixture on the side of an oral cavity as in the conventional constitution, but the fixture is provided with a guide part having a cylindrical shape with an inner surface that is larger than an outer diameter of an internal thread provided along the major axis, on an oral cavity side of the internal thread, for inserting therein a cylindrical part formed to protrude from a side of the abutment opposite to the oral cavity, and the guide part is provided with plural engagement recessions communicating with the oral cavity side, for engaging with plural engagement protrusions provided on an outer surface of the oral cavity side of the cylindrical part of the abutment. The abutment is provided, on the side opposite to the oral cavity, with a contact surface, with which the end surface of the fixture on the oral cavity side is in contact, a cylindrical part, a surface continuing from the contact surface on the side opposite to the oral cavity of which is to be inserted into the guide part of the inner surface on the oral cavity side of the fixture, and the engagement protrusions, on at least the oral cavity side of the cylindrical part, for engaging with the engagement recessions of the fixture. The cylindrical part of the abutment is inserted into the guide part of the fixture, and the engagement protrusions of the abutment are engaged with the engagement recessions of the fixture, whereby the contact surface is made in contact with the end surface of the fixture on the oral cavity side. According to the structure thus obtained, the vertical dimension of the abutment can be lowered, and the stable state where the abutment is not rotated with respect to the fixture can be maintained. Furthermore, the abutment is provided, on the oral cavity side, with a supporting surface, with which a flange part provided on an outer surface on the oral cavity side of a head part of a keeper with screw is in contact, and a recessed part having a cylindrical inner shape on the center of the supporting surface. The cylindrical part of the head part provided with the flange part, which is to be an adsorption surface of a magnetic attachment on the oral cavity side of the keeper with screw, and the cylindrical part, which is to be inserted into the cylindrical recessed part of the abutment on the side opposite to the oral cavity, is inserted into the cylindrical recessed part of the abutment, and an external thread of the keeper with screw is fitly inserted into the through hole of the abutment and engaged with the internal thread of the fixture, whereby the flange part of the head part is made in contact with the supporting surface on the oral cavity side of the abutment. According to the structure thus obtained, the keeper with screw is fixed to the abutment and the fixture with screwing through the overlapping structure, in which the keeper with screw is engaged with the cylindrical recessed part and the through hole, whereby a transversal load applied to the keeper does not immediately act on the screw part fixing the keeper, and thus the possibility of breaking the external thread can be considerably decreased. Thus, the invention has been completed.

The present invention relates to a dental implant for a magnetic attachment, the dental implant comprising:
a fixture having a guide part having a cylindrical shape with an inner surface that is larger than an outer diameter of an internal thread provided along a major axis and being provided on an oral cavity side of the internal thread, and plural engagement recessions communicating with an oral cavity side and being provided in the guide part;
an abutment having a supporting surface on an oral cavity side, a recessed part having a cylindrical inner shape on the center of the supporting surface, and a contact surface, which is provided on the side opposite to an oral cavity and with which an end surface of the fixture on the oral cavity side is in contact, and having, on a side continuing from the contact surface opposite to an oral cavity, a cylindrical part protruding to be inserted into the guide part of the fixture, and a through hole along a major axis having plural engagement protrusions, which are to be engaged with the engagement recessions of the fixture, on at least an oral cavity side of the cylindrical part; and
a keeper with screw having a head part having, on an outer surface on an oral cavity side, a flange part to be made in contact with the supporting surface on the oral cavity side of the abutment, and having, on a side opposite to the oral cavity of the flange part, a cylindrical part tobe inserted into the recessed part having a cylindrical inner shape of the abutment, the keeper having an external thread on a side opposite to the oral cavity of the head part, the external thread being to be screwed into the internal thread of the fixture with the keeper being fitly inserted into the through hole of the abutment.

In such the dental implant for a magnetic attachment according to the present invention, it is preferred that an outer diameter on the oral cavity side of the keeper with screw is the same as an outer diameter of the supporting surface on the oral cavity side of the abutment. According to the structure, the area of the adsorption surface of the keeper as a magnetic attachment exposed from the gingival surface can be advantageously maximized.

In the dental implant for a magnetic attachment according to the present invention, a fixture and an abutment are provided as separate members, whereby an abutment can be replaced to the fixture embedded in maxilla of an edentulous jaw, and thus the abutment can be selected when transferring from a denture prosthesis to a bridge prosthesis. The fixture is provided with a part capable of engaging with the abutment with a sufficient height for preventing the abutment from being rotated around the major axis of the fixture, whereby the vertical dimension of the abutment can be lowered to prevent the implant from being exposed due to decrease in gingival height. Accordingly, not only excellent aesthetic quality can be obtained in anterior teeth, but also a denture prosthesis can be advantageously applied to a case with a low vertical dimension of occlusion, and the length of the crown can be reduced since the exposed length from the gingival surface can be lowered, whereby a transversal load applied to a surrounding bone can be reduced. Furthermore, the keeper is supported by the side surface of the abutment on the oral cavity side, and moreover, the cylindrical part of the keeper is engaged with the recessed part having a cylindrical inner shape of the abutment. Accordingly, the stability is improved. In addition, the screw part of the keeper is inserted into and engaged with the through hole of the abutment and then screwed into the internal thread of the fixture, whereby such a mechanical advantage is obtained that the length of the crown can be reduced, and since a transversal load from the denture is transferred to the side surfaces of the respective members but is hard to be transferred to the screw part, the stress applied to the screw part of the keeper made of a soft magnetic material, which unavoidably has a low strength, can be reduced to lower the possibility of breakage.

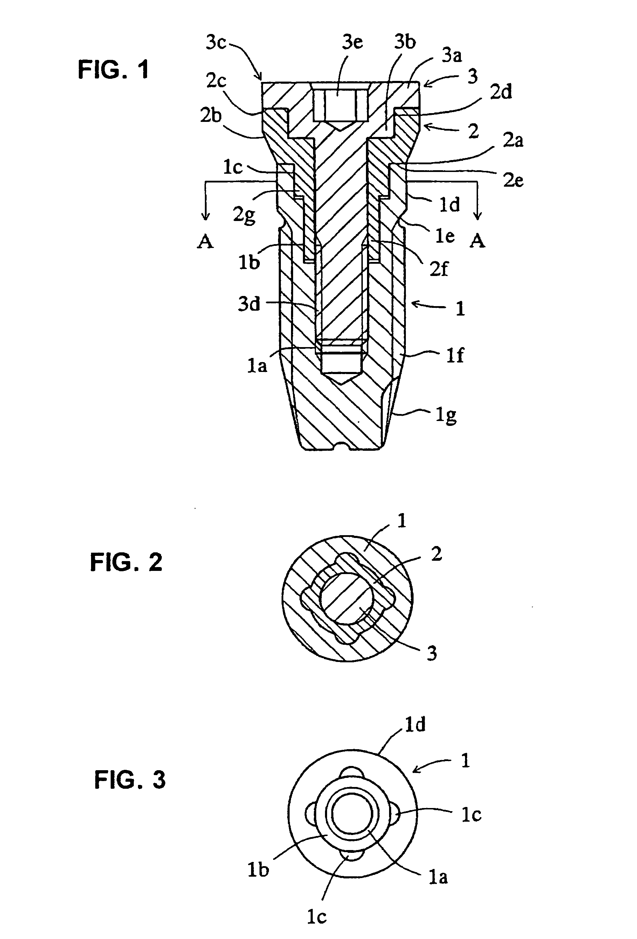

Fig. 1 is a vertical sectional view showing an assembled state of one example of a dental implant for a magnetic attachment according to the present invention.

Fig. 2 is a transversal sectional view of the dental implant for a magnetic attachment on line A-A in Fig. 1.

Fig. 3 is a plan view showing a fixture of the dental implant for a magnetic attachment shown in Fig. 1.

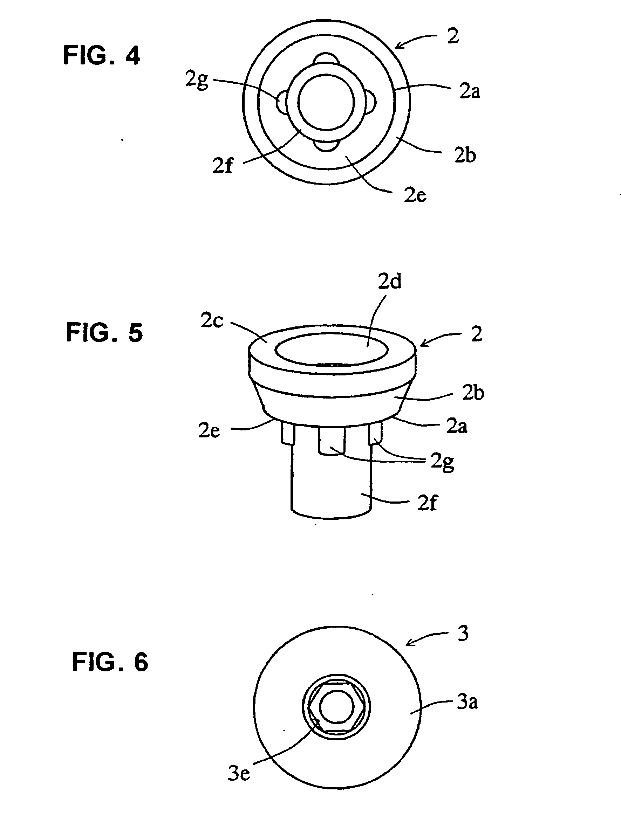

Fig. 4 is a bottom plan view showing an abutment of the dental implant for a magnetic attachment shown in Fig. 1.

Fig. 5 is a perspective view showing the abutment of the dental implant for a magnetic attachment shown in Fig. 1.

Fig. 6 is a plan view showing a keeper of the dental implant for a magnetic attachment shown in Fig. 1.

The dental implant for a magnetic attachment according to the present invention will be described in detail with reference to the drawings.

In the drawings, numeral 1 denotes a fixture as a constitutional component of a dental implant for a magnetic attachment according to the present invention. The fixture 1 is to be embedded in an embedding hole formed in maxilla where a tooth is lost of a patient for fixing to the maxilla, and is formed of titanium or a titanium alloy having high biocompatibility. The fixture 1 is provided with an internal thread 1a along the major axis thereof, a guide part 1b having a cylindrical shape that is larger than the internal thread 1a, on the oral cavity side of the internal thread 1a, and plural engagement recessions 1c communicating with the oral cavity side on the guide part 1b. In general, the fixture 1 is provided with a cylindrical collar part 1d, a notch part 1e and a tapered external thread part 1f in this order from an end of the oral cavity side on the outer surface thereof. A cutter blade part 1g having a self - tapping function is provided toward the oral cavity side from the lower end of the external thread 1f.

In the case where the fixture 1 has the cylindrical collar part 1d at the end on the oral cavity side of the outer surface thereof, the fixture 1 can be prevented from being excessively inserted by the position of the collar part 1d functioning as a stopping position of embedding. In the case where the notch part 1e is provided successively to the cylindrical collar part 1d, the surface of the notch part 1e is made in contact with the maxilla when inserting the fixture 1 into the embedding hole formed in the maxilla where a tooth is lost, whereby the initial fixing strength can be increased. In order to obtain the effect, it is preferred that the diameter of the notch part 1e is larger than the root diameter of the external thread 1f.

Numeral 2 denotes an abutment as a constitutional component of the dental implant for a magnetic attachment according to the present invention. The abutment 2 is positioned on the oral cavity side of the fixture and inserted into the gingiva, and is formed of titanium or a titanium alloy having high biocompatibility. In general, the abutment 2 has a part 2a having substantially the same outer diameter as the maximum outer diameter of the end of the fixture 1 on the oral cavity side, and the outer diameter is increased away from the fixture 1 toward the oral cavity side to form a truncated cylindrical part 2b having a circular truncated cone shape. A supporting surface 2c is formed on the surface on the oral cavity side of the truncated cylindrical part 2b, a recessed part 2d having a cylindrical inner shape is formed on the center of the supporting surface 2c, and a contact surface 2e, with which the surface of the fixture 1 on the oral cavity side is in contact, is formed on the side opposite to the oral cavity of the truncated cylindrical part 2b. A cylindrical part 2f continuing and protruding from the contact surface 2e is provided on the side opposite to the oral cavity, and the cylindrical part 2f is to be fitly inserted into the guide part 1b of the fixture 1. Plural engagement protrusions 2g are provided on at least the oral cavity side of the cylindrical part 2f, and the plural engagement protrusions 2g are engaged with the engagement recessions 1c of the fixture. The abutment 2 has a through hole along the major axis thereof.

Numeral 3 denotes a keeper with screw as a constitutional component of the dental implant for a magnetic attachment according to the present invention. The keeper with screw 3 has an adsorption surface on the oral cavity side exposed to the oral cavity and is formed of a soft magnetic material. The keeper 3 has a flange part 3a on the outer surface thereof on the oral cavity side, and the flange part 3a is to be made in contact with the supporting surface 2c on the oral cavity side of the abutment 2. A cylindrical part 3b is provided on the side opposite to the oral cavity of the flange part 3a, and the cylindrical part 3b is to be inserted into the recessed part 2d having a cylindrical inner shape of the abutment 2. The keeper 3 has a head part 3c, in the center of which a rotational engagement part 3e, such as a hexagonal hole, isprovided for engagement with a rotation tool, such as a hexagonal wrench. The keeper 3 also has, on the side opposite to the oral cavity of the head part 3c, an external thread 3d to be fitly inserted into the through hole of the abutment 2 and screwed into the internal thread 1a of the fixture 1.

In order to carry out dental implant prosthetic remedy by using the dental implant for a magnetic attachment according to the present invention, the fixture 1 is firstly embedded into the embedding hole formed in maxilla where a tooth is lost of a patient. The embedding operation may be carried out in the following manner in the case where the fixture 1 has the cylindrical collar part 1d, the notch part 1e and the tapered external thread part 1f in this order from the end surface on the oral cavity side on the outer surface thereof, and the cutter blade part 1g having a self-tapping function is provided toward the oral cavity side from the lower end of the external thread 1f. A rotation tool (which is not shown in the figures), which is to be inserted into the guide part 1b on the oral cavity side of the internal thread 1a provided along the major axis of the fixture 1 and has engagement protrusions to be inserted and engaged with the plural engagement recessions 1c of the fixture on the front end, is inserted into the inner surface on the oral cavity side of the fixture 1 and is rotated to embed the fixture 1 into the embedding hole formed in maxilla where a tooth is lost of the patient until the embedded depth is restricted by the collar part 1d of the fixture 1.

Subsequently, the cylindrical part 2f of the abutment 2 is inserted into the guide part 1b on the oral cavity side of the internal thread 1a provided along the major axis of the fixture 1, which has been fixed to the maxilla through osseous union, and the engagement protrusions 2g are respectively inserted into and engaged with the plural engagement recessions 1c provided to communicate with the oral cavity side of the guide part 1b of the fixture 1 to make the contact surface 2e into contact with the end surface on the oral cavity side having the maximum diameter on the oral cavity side of the fixture 1, whereby the abutment 2 is stably fixed to the fixture 1 without rotation.

Thereafter, the external thread 3d of the keeper with screw 3 is fitly inserted into the through hole of the abutment 2, and the external thread 3d of the keeper with screw 3 is screwed into the internal thread 1a of the fixture 1, whereby the cylindrical part 3b of the head part 3c of the keeper with screw 3 is fitly inserted into the recessed part 2d having a cylindrical inner shape of the abutment 2 to make the flange part 3a of the head part 3c in contact with the supporting surface 2c on the oral cavity side of the abutment 2 to be thereby supported, and consequently, the keeper with screw 3 and the abutment 2 are fixed to the fixture 1.

In the state where the keeper with screw 3 and the abutment 2 are fixed to the fixture 1, the abutment 2 is engaged to fixture 1 on the embedding side with respect to the end surface on the oral cavity side of the fixture 1 in such manner that the abutment 2 is not rotated. Therefore, the abutment 2 is less restricted in vertical dimension, and the engagement and insertion length thereof with the fixture 1 can be sufficiently long as compared to a conventional abutment to thereby provide excellent stability. Furthermore, the cylindrical part 3b of the head part 3c of the keeper with screw 3 fitly is inserted into the recessed part 2d having a cylindrical inner shape of the abutment 2, which has been stably fixed to the fixture 1 without rotation, and the external thread 3d is fitly inserted into the through hole of the abutment 2 and then screwed into the internal thread 1a of the fixture 1, so as to provide an integrated constitution with the overlapping structure. Accordingly, a transversal load applied to the keeper does not immediately act on the screw part fixing the keeper, and thus the possibility of breaking the external thread 3d can be considerably decreased.

Moreover, it is preferred that the outer diameter on the oral cavity side of the keeper with screw 3 is the same as the outer diameter of the supporting surface 2c on the oral cavity side of the abutment 2, whereby the area of the adsorption surface of the keeper as a magnetic attachment exposed from the gingival surface can be maximized.

## Claims

1. A dental implant for a magnetic attachment, the dental implant comprising:
a fixture (1) having a guide part (1b) having a cylindrical shape with an inner surface that is larger than an outer diameter of an internal thread (1a) provided along a major axis and being provided on an oral cavity side of the internal thread (1a) and plural engagement recessions (1c) communicating with an oral cavity side and being provided in the guide part (1b), and an end surface on the oral cavity side;
an abutment (2) having a supporting surface (2c) on an oral cavity side, a recessed part (2d) having a cylindrical inner shape on the center of the supporting surface (2c) and a contact surface (2e), which is provided on the side opposite to the oral cavity side and with which the end surface of the fixture is in contact, and having, on a side continuing from the contact surface (2e) opposite to the oral cavity side, a cylindrical part (2f) protruding to be inserted into the guide part (1b) of the fixture (1) and a through hole along a major axis, and the cylindrical part (2f) having plural engagement protrusions (2g), which are to be engaged with the engagement recessions (1c) of the fixture, on at least an oral cavity side of the cylindrical part (2f), and
a keeper (3) with screw, formed of a soft magnetic material, having a head part (3c) having, on an outer surface on an oral cavity side, a flange part (3a) to be made in contact with the supporting surface (2c) on the oral cavity side of the abutment (2) and having, on a side opposite to the oral cavity side of the flange part (3a), a cylindrical part (3b) to be inserted into the recessed part (2d) of the abutment (2) the keeper (3) having an external thread (3d) on a side opposite to the oral cavity side of the head part (3c), the external thread (3d) being to be screwed into the internal thread (1a) of the fixture with the keeper (3) being fitly inserted into the through hole of the abutment (2).

2. The dental implant for a magnetic attachment as claimed in claim 1, wherein an outer diameter on the oral cavity side of the keeper with screw (3) is the same as an outer diameter of the supporting surface (2c) on the oral cavity side of the abutment (2).

## Patentansprüche

1. Zahnimplantat für magnetische Befestigung, wobei das Zahnimplantat umfasst:
eine Halterung (1) mit einem Führungsteil (1 b), der eine zylindrische Form mit einer Innenfläche aufweist, die größer als ein Außendurchmesser eines Innengewindes (1 a) ist, das entlang einer Hauptachse angeordnet ist und auf einer Mundhöhlenseite des Innengewindes (1 a) angeordnet ist, und vielfache Eingriffvertiefungen (1 c), die mit einer Mundhöhlenseite in Verbindung stehen und in dem Führungsteil (1 b) angeordnet sind, und eine Stirnfläche auf der Mundhöhlenseite;
ein Auflageelement (2), welches eine Trägerfläche (2c) auf einer Mundhöhlenseite aufweist, einen eingelassenen Teil (2d), der eine zylindrische innere Form im Zentrum der Trägerfläche (2c) aufweist, und eine Kontaktfläche (2e), die auf der Seite, die der Mundhöhle gegenüber liegt, angeordnet ist, und mit der die Stirnfläche der Halterung in Kontakt steht, und auf einer Seite, die von der Kontaktfläche (2e) gegenüber der Mundhöhlenseite fortgesetzt wird, einen zylindrischen Teil (2f) aufweist, der hervorsteht, um in den Führungsteil (1 b) der Halterung (1) eingesetzt zu werden, und eine Durchgangsbohrung entlang der Hauptachse, wobei der zylindrische Teil (2f) vielfältige Eingriffausstülpungen (2g) aufweist, welche mit den Eingriffvertiefungen (1c) der Halterung an mindestens einer Mundhöhlenseite des zylindrischen Teils (2f) in Eingriff zu bringen sind, und
einen/ein aus einem weichen magnetischen Material gebildeten Anker bzw. Schließstück (3) mit Gewinde, der/das ein Kopfteil (3c) aufweist, das an einer Außenfläche an einer Mundhöhlenseite ein Flanschteil (3a) aufweist, das mit der Trägerfläche (2c) an der Mundhöhlenseite des Auflageelements (2) in Kontakt zu bringen ist, und an einer Seite, die der Mundhöhlenseite des Flanschteils (3a) gegenüber liegt, einen zylindrischen Teil (3b) aufweist, der in den eingelassenen Teil (2d) des Auflageelements (2) einzuführen ist, wobei der Anker (3) an einer Seite, die der Mundhöhlenseite des Kopfteils (3c) gegenüber liegt, ein Außengewinde (3d) aufweist, wobei das Außengewinde (3d) ausgelegt ist, in das Innengewinde (1a) der Halterung geschraubt zu werden, wobei der Anker (3) passend in die Durchgangsbohrung des Auflageelements (2) eingeführt ist.

2. Zahnimplantat für magnetische Befestigung wie in Anspruch 1 beansprucht, wobei ein Außendurchmesser an der Mundhöhlenseite des Ankers mit Gewinde (3) der gleiche ist, wie ein Außendurchmesser der Trägerfläche (2c) an der Mundhöhlenseite des Auflageelements (2).

## Revendications

1. Implant dentaire pour fixation magnétique, l'implant dentaire comprenant :
une fixation (1) ayant une partie de guide (1b) ayant une forme cylindrique avec une surface interne qui est plus grande qu'un diamètre externe d'un filetage interne (1a) fourni le long d'un axe majeur et étant fournie sur un côté de cavité buccale du filetage interne (1a) et une pluralité de cavités d'engagement (1c) communiquant avec un côté de cavité buccale et étant fournies dans la partie de guide (1b), et une surface d'extrémité sur le côté de cavité buccale ;
un épaulement (2) ayant une surface de support (2c) sur un côté de cavité buccale, une partie encastrée (2d) ayant une forme interne cylindrique sur le centre de la surface de support (2c), et une surface de contact (2e) qui est fournie sur le côté opposé au côté de cavité buccale et avec laquelle la surface d'extrémité de la fixation est en contact, et ayant, sur un côté continu depuis la surface de contact (2e) opposé au côté de cavité buccale, une partie cylindrique (2f) faisant saillie pour être insérée dans la partie de guide (1b) de la fixation (1), et un trou débouchant le long d'un axe majeur, la partie cylindrique (2f) ayant une pluralité de protubérances d'engagement (2g) qui sont destinées à se mettre en prise avec les cavités d'engagement (1c) de la fixation, sur au moins un côté de cavité buccale de la partie cylindrique (2f) et
une armature avec une vis (3) formée par un matériau magnétique mou, ayant une partie de tête (3c) ayant, sur une surface externe, une partie de rebord (3a) destinée à être en contact avec la surface de support (2c) sur le côté de cavité buccale de l'épaulement (2) et ayant, sur un côté opposé au côté de cavité buccale de la partie de rebord (3a) une partie cylindrique (3b) destinée à être insérée dans la partie encastrée (2d) de l'épaulement (2), l'armature (3) ayant un filetage externe (3d) sur un côté opposé au côté de cavité buccale de la partie de tête (3c), le filetage externe (3d) étant vissé dans le filetage interne (1a) de la fixation, l'armature (3) étant insérée par ajustement à l'intérieur du trou débouchant de l'épaulement (2).

2. Implant dentaire pour fixation magnétique selon la revendication 1, dans lequel un diamètre extérieur sur le côté de cavité buccale de l'armature avec la vis (3) est le même qu'un diamètre externe de la surface de support (2c) sur le côté de cavité buccale de l'épaulement (2).
